Europäisches Patentamt

European Patent Office

Office européen des brevets

(11) Publication number: **0 455 074 A1**

(12) **EUROPEAN PATENT APPLICATION**

(21) Application number: **91106373.3**

(22) Date of filing: **19.04.91**

(51) Int. Cl.⁵: **B60R 9/06, B60R 9/10**

(30) Priority: **19.04.90 IT 2007390**

(43) Date of publication of application:
**06.11.91 Bulletin 91/45**

(84) Designated Contracting States:
**DE FR**

(71) Applicant: **Pozzi, Carlo Maurizio**
**Via Nova, 12/A**
**Ruvigliana(CH)**

(72) Inventor: **Pozzi, Carlo Maurizio**
**Via Nova, 12/A**
**Ruvigliana(CH)**

(74) Representative: **Reichel, Wolfgang, Dipl.-Ing.**
**et al**
**Reichel und Reichel Parkstrasse 13**
**W-6000 Frankfurt am Main 1(DE)**

(54) **Folding carrier, in particular for carrying bicycles.**

(57) A carrier specially adapted for carrying bicycles, suitable for fitting to recreational vehicles is described. The carrier can be folded when not in use. The carrier (10) is made up of a lower folding portion (19), an upper folding portion (14) and a fixed portion (13) comprising two U-shaped side parts (15) fixed to the body (11) of the recreational vehicle. The lower folding portion (19) includes rails (24) and straps (25) to receive bicycle wheels, the upper folding portion (14) comprises a U-shaped part (26) with an articulated arm (32) with sleeves (35) and belts (36,37) to fasten bicycles to the arm. When folded, the articulated arm (32) and upper folding portion (14) fold into the space between the two fixed U-shaped side parts (15) to reduce the height of the carrier when not in use.

FIG. 2

Rank Xerox (UK) Business Services

## 1. Field of the invention

The present invention concerns one pliable device for carrying bicycles, suited for being mounted on recreational vehicles as campers, motorhomes, motorcaravans and caravans.

## 2. Former technics.

By travelling with recreational vehicles, and especially during stops in areas suited for this purpose, it is of big utility having other means of locomotion within easy reach, such as bicycles, especially if the vehicle and the cockpit are not a sole body, but they are separable, as caravans are.

Generally, the transportation of the auxiliary means of locomotion is done through some supporting devices, which are mounted outside the cockpit, solution that offers the advantage of not using the reduced space availability inside the room.

Among the known devices, there are some of the partially pliable kind, including one frame fitted with some brackets for fixing it at one cockpit wall, and to which one shelf and one arm, upsetable from a working position to a resting position, are constrained, the shelf being fitted with rails for the lodging of the bicycles weels and with belts for fixing the weels, the arms being fitted with belts for the fixing of the bicycles barrels.

These devices have a light, resistant frame, and are easy to be hanged and unhanged from the cockpit wall; but they have a fair extension in height and have wall mounting brackets at a distance, which is substantially similar to the height of the bicycles, therefore being quite cumbersome, even when shelf and arm are upset in resting position; they cannot therefore be mounted on a wall fitted with a window, nor they can be mounted over it, obstructing it or hindering its opening.

## 3. Summary of the invention.

Purpose of present invention is a pliable device for carrying bicycles, which allows to overcome the disadvantages of the known solutions, and that in working position, but especially in resting position, has a minimal extension in height.

The device as to the invention includes one frame fitted with wall fixing brackets and to which one shelf and one arm, upsetable from a working to a resting position, are constrained, the shelf being fitted with at least one rail for the lodging of the bicycles weels and of belts for blocking the same, the arm being fitted with belts for blocking the bicycles barrels, the device being characterized from the fact that said frame is composed from a fixed structure and from a structure moveable from a working to a resting position.

As per a preferred solution, said moveable structure is upsetable and formed from one U-shaped tube, pivoted to the fixed structure through pins and fixable to the same in working position, through disengageable blocking means.

Advantageously, said upsetable structure is constrained to one end of the fixed structure, in a way that it sticks out in spurts in working position and recedes inside in resting position; furtherly said fixed structure can be hanged and unhanged from said wall through mounting brackets, situated at a reduced distance, inferior to the height of the bicycles and said upsetable arm is constrained to said upsetable structure.

Thank to this solution, when the upsetable structure is in resting position, the extension in height of the device for carrying bikes is extremely contained; therefore, an eventual windown situated next to the device will not be obstructed and can be freely opened.

## 4. Detailed description of the invention

Characters and advantages of the invention will be explained in relation to the pictures 1÷6 here attached, in which it is represented as non limiting example one preferred construction of same invention.

- Picture 1 is a front view of the device for carrying bicycles as per invention;
- Picture 2 is a lateral view of the device of pict. 1;
- Pictures 3,4 and 5 show the sequence of the operations through which the device is carried from the working position of pict. 2 to the resting position;
- Picture 6 is a partial overview on one detail of the device of pict. 1;

In the pictures it is indicated with no. 10 one device for carrying bicycles, mounted on wall 11 of the cockpit of a recreational vehicles, not showed.

Device 10 includes one frame, indicated with no. 12, composed from one fixed structure no. 13 and one moveable structure no. 14, in particular one upsetable structure, made for in. in anodyzed aluminium.

The fixed structure 13 is of tubular kind, made up from two U-shaped backboards 15, which are linked from a crosspiece, not showed, which is fitted with journal boxes 16 for the bearing to the wall 11; each backboard 15 has adjustable height, being formed from two pieces engaged in one other and fixed with through bolts 17.

The backboards 15 are fitted with lower - 16 - and upper - 18 - attachments brackets, situated at a distance inferior to the height of the bicycles, through which the device 10 can be hanged and unhanged from the wall 11.

It is indicated with no. 19 one upsetable shelf, constrained to the backboards 15 through brackets 20, bolts 21 and holdfasts 22; the shelf 19 is formed from one U-shaped tube, indicated with no. 23, to which three rails 24 are fixed, being these rails fitted with belts 25 for blocking the bicycles weels.

The upsetable structure 14 is formed from one U-shaped tube 26, which is pivoted to the fixed structure 13 through two bolts 27, which act as fulcrum, and which is fixable through means log blocking 28, visible also in pict. 6, made up from one threaded spindle fitted with one chagreened handle 29, passing through some holes of the tubes 15 and 26, such as the one indicated as no. 39 in pictures 4 and 5, and from one nut, or wing nut, 30; as an alternative, the blocking means 28 could be made up from one nail, passing through holes of the tubes 15 and 26, and kept in seat from one proper spring (not showed).

Some sleeves 31 are mounted on the tube 26, two as support for the bicycles, and one as support of the upsetable arm 32, which is blocked on same tube 26 through the bracket 33, fitted with threaded ends, and through the wing nuts 34.

The arm 32 is fitted with sleeves 35, belts 36 and from one blocking terminal belt 37, fixed to same arm.

The device 10 can be mounted on wall 11 in one area of modest height, for in. below one window, because the distance between the attachment brackets 16 and 18 is reduced, inferior to the bicycles height.

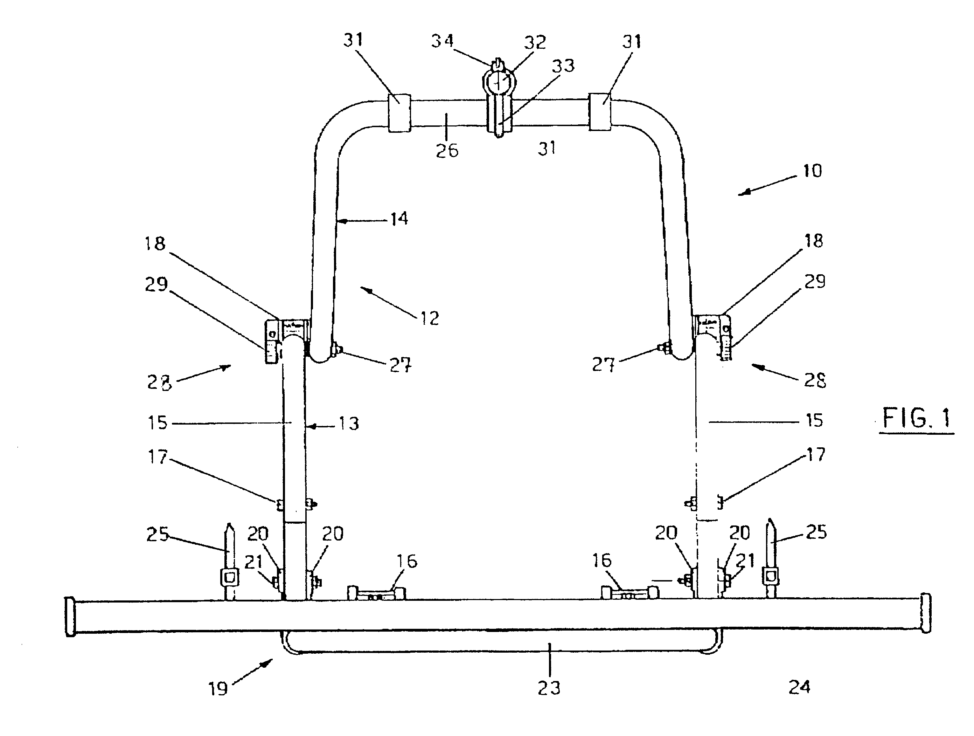

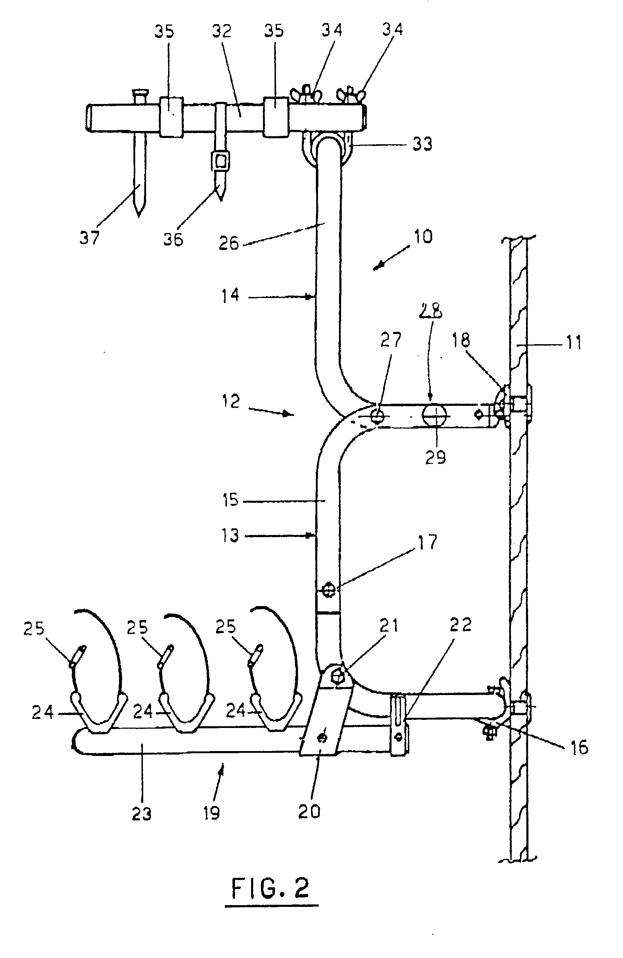

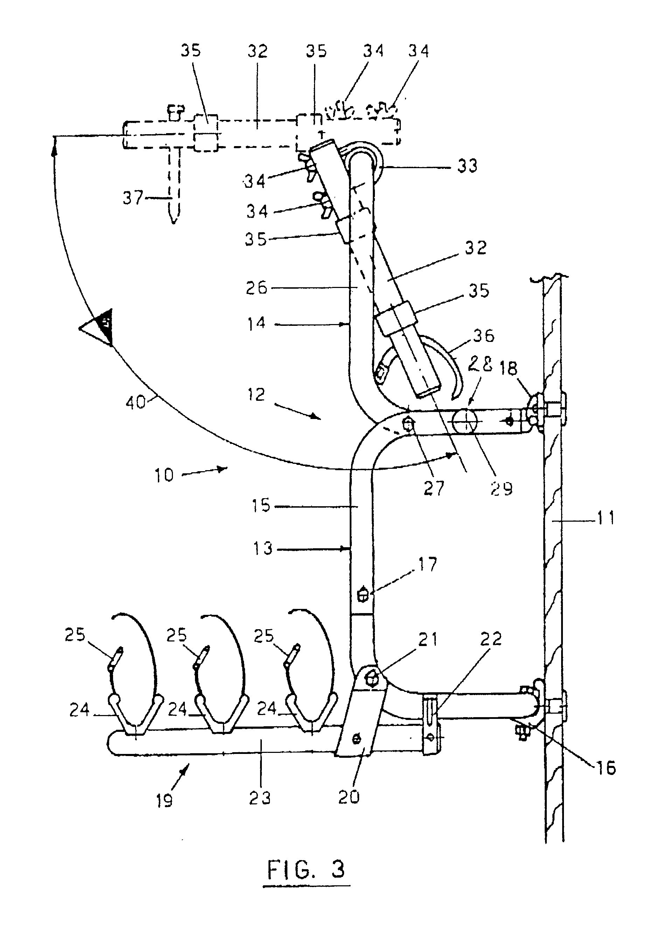

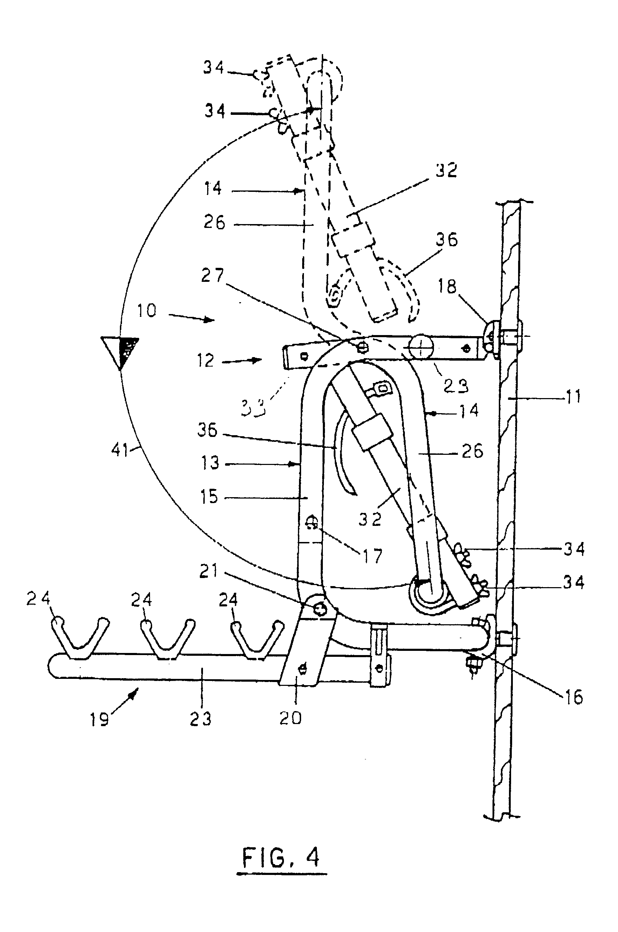

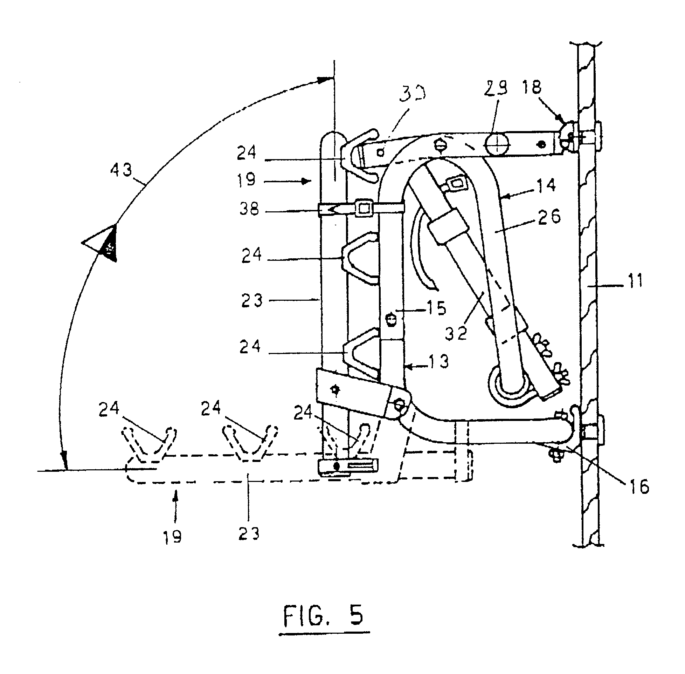

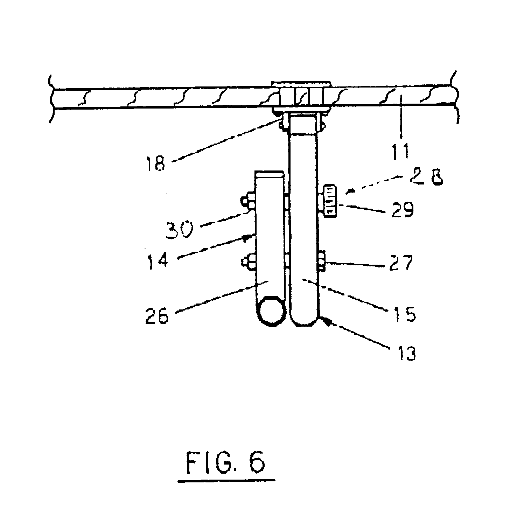

When the device 10 is arranged in working position, as showed in fig. 1 and 2, the upsetable shelf 19 is opened and substantially put in orthogonal position in relation to the tubolar structure 13, retained firmly from selfblocking holdfasts 22; the tubolar upsetable structure 14 is lifted and fixed in spurts in relation to the structure 13, substantially parallel to the wall 11, through the blocking brackets 28; the upsetable arm 32 is opened and put orthogonally, or inclined of a definite corner, in relation to the structure 14.

The bicycles are put on the shelf 19, with the weels positioned in the rails 24 fixed through the belts 25 and with their barrels fixed to the arm 32 through the belts 36.

When the device 10 is not in use, the arm 32 can be bent again, by rotating it of a corner of about 115°, as showed from the arch 40 in picture 3, first by relaxing, and then by blocking again, the wing nuts 34 end the bracket 33; the tubolar structure 14 can be lowered, by rotating it of a corner of about 185°, as showed from arch 41 in picture 4, for positioning it inside the backboards 15 of the fixed structure 13, removing the blocking means 28 from the holes 39; finally, the shelf 19 can be lifted, by rotating it of a corner of about 90°, as showed from arch 43 in picture 5, after detaching the holdfasts 22 from the backboards 15, in a way to upset it next to the structure 13, to which it is fixed through belts, as the one showed with no. 38 in same picture 5.

The structures 13 and 14 are retained firmly in resting position from the tube 26 which inserts itself in one roll 24, as shown in picture 5; if necessary, it can even be used one belt 36 for blocking the structure 14 with respect to the structure 13.

The device 10 is particularly functional as it is very manegeable and very easy to be operated, and as for the little encumbrance in height, which is extremely reduced, especially in resting position, as shown in picture 5; it can be therefore mounted on the wall 11 even below an eventual window, because it will obstruct this only partially in working position, whilst the window is completely free in resting position.

## Claims

1. Pliable device for carrying bicycles, fitted for being mounted on recreational vehicles suited with a cockpit, including one frame (12) fitted with attachment brackets (16 and 18) for installation on one wall (11) of said cockpit, and to which one shelf (19) and one arm (32) are constrained, being said shelf and arm upsetable from a working position to a resting position, said shelf (19) being fitted with at least one rail (24) for lodging the bicycles weels and with belts (25) for blocking same weels, the arm (32) being fitted with belts (36 and 37) for fixing the barrels of the bicycles, the device being characterized from the fact that said frame is composed from one fixed structure (13) and from a structure (14) moveable from a working position to a resting position.

2. Device as for claim no. 1. characterized from the fact that said structure moveable (14) is upsetable and is formed from one U-shaped tube, pivoted on said fixed structure through pins (27), and fixable to the same in working position, through disengageable blocking means (28).

3. Device as for claim no. 2 characterized from the fact that said upsetable structure (14) is constrained at one end of said fixed structure (13), in a way that it protrudes in spurts in working position and it recedes inside in resting position.

4. Device as for claim no. 1 characterized from the fact that said fixed structure (13) can be hanged and unhanged from said wall (11) through attachments bracket (16, 18) situated at a reduced distance, interior to the height of the bicycles.

5. Device as for claims no. 1 and 2, characterized from the fact that said upsetable arm is constrained to said upsetable structure (14).

FIG. 1

FIG. 2

FIG. 3

FIG. 4

FIG. 5

FIG. 6

European
Patent Office

**EUROPEAN SEARCH
REPORT**

Application Number

**EP 91 10 6373**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 362 082  (FIOL)<br>* column 3, lines 27 - 34 *<br>– – – | 1-5 | B 60 R 9/06<br>B 60 R 9/10 |
| X | DE-A-3 235 248  (HYMER LEICHTMETALLBAU)<br>* page 7, line 15 - page 10, line 8 *<br>– – – – – | 1,2 | |

TECHNICAL FIELDS
SEARCHED (Int. Cl.5)

B 60 R

The present search report has been drawn up for all claims

| Place of search | Date of completion of search | Examiner |
|---|---|---|
| The Hague | 23 August 91 | STANDRING M A |

CATEGORY OF CITED DOCUMENTS

X : particularly relevant if taken alone
Y : particularly relevant if combined with another
 document of the same catagory
A : technological background
O : non-written disclosure
P : intermediate document
T : theory or principle underlying the invention

E : earlier patent document, but published on, or after
 the filing date
D : document cited in the application
L : document cited for other reasons

&: member of the same patent family, corresponding
 document